# FASCICULE DE BREVET EUROPEEN

(11) **EP 3 921 922 B1**
(45) Date de publication et mention de la délivrance du brevet: **20.03.2024**
(21) Numéro de dépôt: 20700221.3
(22) Date de dépôt: 14.01.2020
(51) Int. Cl.: H02K 1/2733, H02K 1/28, H02K 7/00, H02K 7/14, F01D 15/10

(54) **DISPOSITIF DE COMPRESSION D'UN FLUIDE ENTRAINE PAR UNE MACHINE ELECTRIQUE AVEC ARBRE DE COMPRESSION TRAVERSANT LE ROTOR**
VORRICHTUNG ZUM VERDICHTEN EINES VON EINER ELEKTRISCHEN MASCHINE ANGETRIEBENEN FLUIDS MIT EINER DEN ROTOR DURCHSETZENDEN KOMPRESSIONSWELLE
DEVICE FOR COMPRESSING A FLUID DRIVEN BY AN ELECTRIC MACHINE WITH A COMPRESSION SHAFT PASSING THROUGH THE ROTOR

(30) Priorité: 04.02.2019 FR 1901074
(43) Date de publication de la demande: 15.12.2021
(73) Titulaire: IFP Energies nouvelles, 92852 Rueil-Malmaison (FR)
(72) Inventeur: LE BERR, Fabrice, 92852 RUEIL-MALMAISON CEDEX (FR); MILOSAVLJEVIC, Misa, 92852 RUEIL-MALMAISON CEDEX (FR); GROSJEAN, Denis, 92852 RUEIL-MALMAISON CEDEX (FR)
(74) Mandataire: IFP Energies nouvelles
(86) Numéro de dépôt international: PCT/EP2020/050746
(87) Numéro de publication internationale: WO 2020/160878

(56) Documents cités:
- EP-A1- 2 031 732
- WO-A1-02/23047
- WO-A1-2015/061767
- FR-A1- 3 048 022
- GB-A- 2 416 806
- GB-A- 2 498 400
- US-A- 3 700 372
- US-A- 4 433 261

## Description

### Domaine technique

La présente invention concerne le domaine des dispositifs de compression entraînés par une machine électrique, en particulier l'invention concerne un turbocompresseur entraîné par une machine électrique.

Elle concerne notamment un dispositif pour comprimer un fluide gazeux, ici de l'air, par un compresseur, seul ou associé à une turbine pour former un turbocompresseur, pour ensuite l'envoyer vers tous appareils et plus particulièrement à l'admission d'un moteur à combustion interne.

En effet, comme cela est largement connu, la puissance délivrée par un moteur à combustion interne est dépendante de la quantité d'air introduite dans la chambre de combustion de ce moteur, quantité d'air qui est elle-même proportionnelle à la densité de cet air.

Ainsi, il est habituel d'augmenter cette quantité d'air au moyen d'une compression de l'air extérieur avant qu'il ne soit admis dans cette chambre de combustion lors d'un besoin d'une forte puissance. Cette opération, appelée suralimentation, peut être réalisée par tous moyens, tel qu'un compresseur seul entraîné électriquement par une machine électrique (compresseur électrifié), ou par un compresseur associé à une turbine et à une machine électrique pour former un turbocompresseur électrifié.

### Technique antérieure

Dans les deux cas précités, la machine électrique associée au compresseur peut être de différents types.

L'un de ces types est une machine électrique à faible entrefer et bobinages proches du rotor qui permet un guidage optimal du flux magnétique et un rendement optimisé. Ce type de machine électrique présente l'avantage d'une certaine compacité, qui peut parfois devenir problématique pour son refroidissement et qui demande l'utilisation d'un système spécifique pour évacuer ses pertes.

Afin de ne pas être intrusif sur l'entrée d'air du compresseur, ce type de machine électrique est classiquement positionné au dos du compresseur dans le cas d'un compresseur électrifié, ou entre le compresseur et la turbine dans le cas d'un turbocompresseur électrifié, et cela malgré la présence d'un environnement thermique défavorable dans ce dernier car proche de la turbine. Généralement, la liaison entre le compresseur, la turbine et la machine électrique est rigide. Ce type de machine peut aussi être positionné côté compresseur mais à une distance relativement éloignée de l'entrée d'air afin de ne pas perturber cette dernière. La liaison entre le compresseur et la machine électrique est alors rigide ou réalisée à l'aide d'un accouplement mécanique ou magnétique.

Ce type de système est mieux décrit dans les brevets US 2014/0373532, US 8,157,543, US 8,882,478, US 2010/0247342, US 6,449,950, US 7,360,361, EP 0 874 953 ou EP 0 912 821.

Un autre de ces types est une machine électrique à fort entrefer (appelée machine à « Air Gap »), dont l'entrefer peut parfois mesurer plusieurs centimètres afin de laisser passer le fluide de travail dans cet entrefer permettant ainsi une intégration au plus proche des systèmes de compression, dans un environnement thermique nettement plus favorable.

Cette disposition de machine électrique présente néanmoins le désavantage de perturber et limiter le passage du flux magnétique entre le rotor et le stator au travers du grand entrefer, ce qui contribue à limiter le rendement intrinsèque de la machine électrique ainsi que ses performances spécifiques (puissance massique et volumique). Les pertes élevées sur ce type de concept obligent aussi à développer un refroidissement spécifique pour évacuer les calories du rotor et du stator ou à limiter les performances spécifiques.

Ce type de machine électrique est notamment décrit dans les brevets EP 1 995 429, US 2013/169074 ou US 2013/043745.

Un troisième type de machine électrique est une machine à grille statorique, c'est-à-dire une machine électrique ayant un stator ayant des dents statoriques autour desquelles sont montées des bobines, ces dents statoriques étant de grandes dimensions pour permettre un passage du flux d'air. Ce type de machine est une machine électrique à faible entrefer et bobinages éloignés du rotor. Ce type de machine électrique peut être placé en à l'admission du compresseur. Une telle machine à grille statorique est décrite notamment dans les demandes de brevet WO2013/050577 et FR 3048022.

Une des problématiques de l'électrification des compresseurs concerne la conception du rotor et sa connexion à l'arbre du compresseur. Cette conception est souvent complexe (utilisation de vis) et coûteuse pour assurer une bonne coaxialité du rotor et de l'arbre du compresseur requise pour fonctionner à très hauts régimes de rotation.

La demande de brevet dont le numéro de dépôt est FR 17/61.576 détaille plusieurs structures de rotor électrique et de montage sur l'arbre d'un turbo compresseur, en rapportant un rotor sur un arbre débouchant côté compresseur. Ces structures sont intéressantes pour intégrer des rotors sur des turbocompresseurs déjà réalisés. Toutefois, ces structures sont la plupart du temps difficilement compatibles avec un procédé industriel de fabrication en grande série, étant donné les tolérances de fabrication et les opérations d'équilibrage nécessaires à réaliser sur le rotor pour arriver à un tel système.

La demande de brevet GB 2416806 décrit un système de compression électrifié.

La demande de brevet FR 3048022 A1 décrit un dispositif de compression à assistance électrique.

La demande de brevet GB 2498400 A décrit un système turbocompresseur avec une machine électrique.

La demande de brevet EP 2031732 A1 décrit un rotor de machine électrique.

La demande de brevet WO 02/23047 A1 décrit une machine électrique pour un turbocompresseur.

La demande de brevet US 3,700,372 décrit une pompe équipée d'une machine électrique. La demande de brevet US 4,433,261 décrit une machine électrique.

La demande de brevet WO2015/061767 A1 décrit un turbocompresseur équipé d'une machine électrique.

### Résumé de l'invention

Pour réduire la complexité du procédé de fabrication et d'assemblage et pour être compatible avec un procédé industriel de fabrication en grande série, la présente invention concerne un dispositif de compression entraîné par une machine électrique, pour lequel le rotor comprend un aimant cylindrique et une frette amagnétique. Selon l'invention, le rotor est monté sur l'arbre de compression, et un écrou est prévu pour maintenir axialement le rotor et la roue de compression du compresseur. Ainsi, l'arbre de compression traverse le rotor, ce qui permet de réduire la complexité des pièces à réaliser, que ce soit du point de vue de la forme des composants ou des tolérances de fabrication à réaliser. De plus, l'invention permet de réduire le nombre d'opérations dans le processus de réalisation et d'assemblage, en particulier les opérations d'équilibrage qui peuvent être coûteuses.

L'invention concerne un dispositif de compression d'un fluide entraîné par une machine électrique, ladite machine électrique comprenant un rotor et un stator, ledit dispositif de compression comprenant un arbre de compression sur lequel est montée au moins une roue de compression, ledit rotor comprenant un aimant cylindrique et une frette pour retenir ledit aimant. Ledit rotor est monté sur ledit arbre de compression, et en ce qu'un écrou placé à l'extrémité dudit arbre de compression maintient axialement ledit rotor et ladite roue de compression.

Selon un mode de réalisation, ledit rotor comporte un moyen de support dudit aimant cylindrique, ledit moyen de support étant cylindrique, et étant disposé autour dudit arbre de compression.

De préférence, ledit moyen de support est une douille cylindrique.

Selon un aspect, ladite douille cylindrique est en butée contre ladite roue de compression et contre ledit écrou.

Avantageusement, ladite douille cylindrique est en butée contre un système de guidage de l'arbre de compression et contre ledit écrou.

En variante, ladite roue de compression est montée sur ladite douille cylindrique.

Alternativement, ladite roue de compression comprend ledit moyen de support.

Selon l'invention, ledit rotor a un diamètre extérieur inférieur ou égal au diamètre du nez de ladite roue de compression.

Selon un aspect, ledit rotor comporte au moins une butée amagnétique sur un côté dudit aimant.

Selon une option de réalisation, ladite frette est réalisée en un matériau amagnétique, de préférence en titane ou en carbone.

Conformément à une caractéristique, ledit dispositif de compression est un turbocompresseur associant une turbine et un compresseur, notamment pour un moteur à combustion interne, ou une microturbine.

De manière avantageuse, ladite machine électrique est agencée dans l'admission du gaz dudit turbocompresseur.

Conformément à un mode de réalisation, ladite machine électrique est une machine à grille statorique.

En outre, l'invention concerne un procédé de fabrication d'un dispositif de compression entrainé par une machine électrique selon revendication 13.

### Liste des figures

D'autres caractéristiques et avantages du dispositif et du procédé selon l'invention, apparaîtront à la lecture de la description ci-après d'exemples non limitatifs de réalisations, en se référant aux figures annexées et décrites ci-après.
[Fig 1]

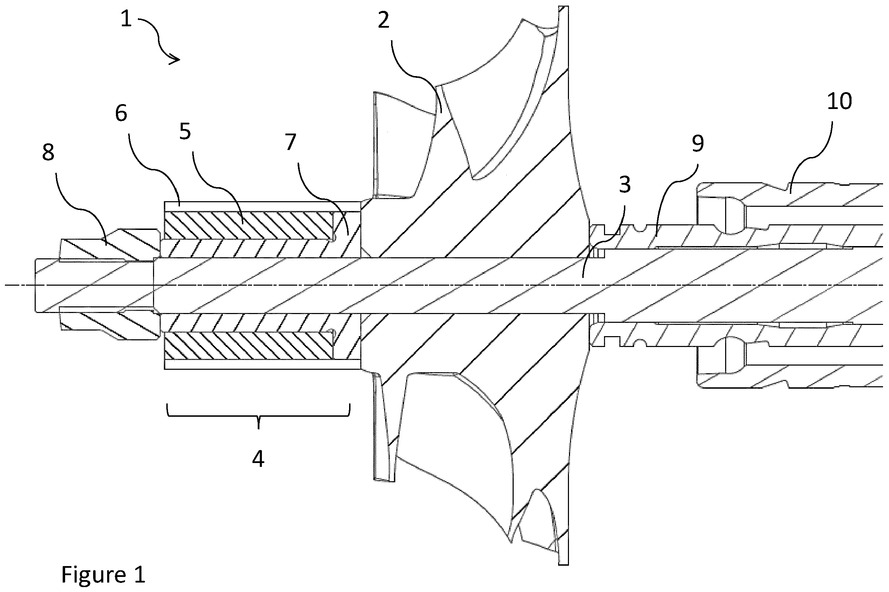

   La figure 1 illustre un dispositif de compression entraîné par une machine électrique selon un premier mode de réalisation de l'invention.
[Fig 2]

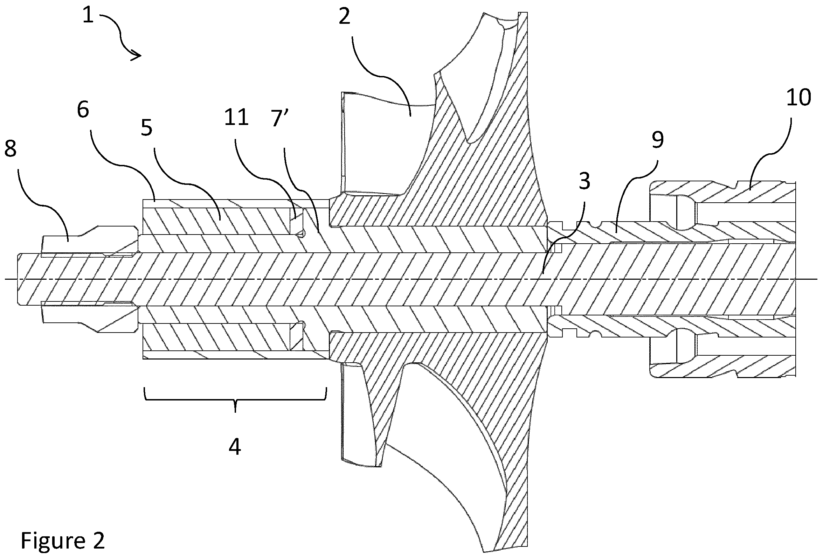

   La figure 2 illustre un dispositif de compression entraîné par une machine électrique selon un deuxième mode de réalisation de l'invention.
[Fig 3]

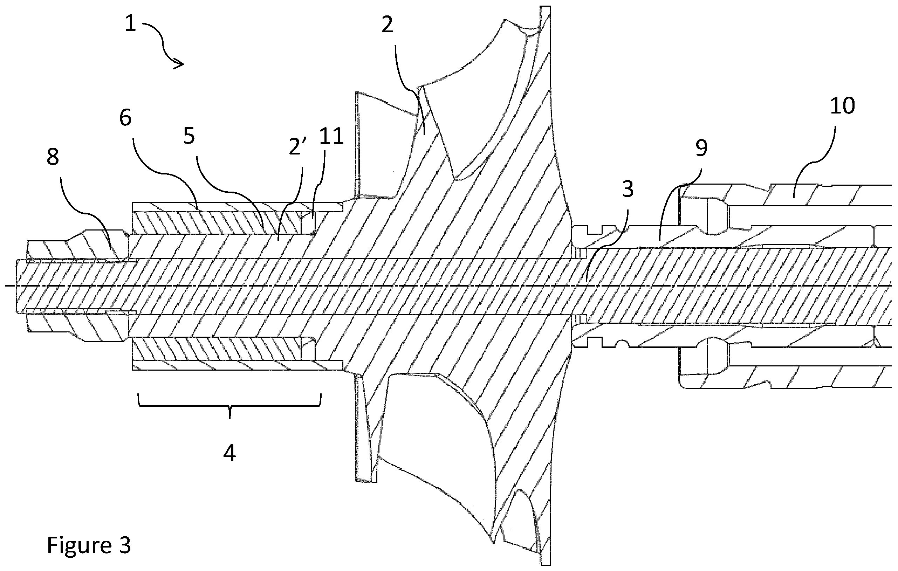

   La figure 3 illustre un dispositif de compression entrainé par une machine électrique selon un troisième mode de réalisation de l'invention.

### Description des modes de réalisation

La présente invention concerne un dispositif de compression d'un fluide, notamment d'un gaz, entraîné par une machine électrique. En d'autres termes, l'invention concerne l'ensemble formé par la machine électrique et le dispositif de compression. De préférence, le dispositif de compression est prévu pour comprimer de l'air.

Le dispositif de compression d'un fluide comprend un arbre, dit arbre de compression, sur lequel est montée une roue de compression (également appelée aube).

La machine électrique comprend un rotor et un stator. Le rotor est monté sur l'arbre de compression, afin de transmettre ou de prélever le couple de la machine électrique à l'arbre de compression et à la roue de compression et inversement.

Le rotor comporte au moins :
- un aimant cylindrique, l'aimant interagit avec des bobines du stator de manière à créer le mouvement de rotation du rotor, et
- une frette, de préférence en matériau amagnétique, par exemple en titane ou en carbone, pour comprimer l'aimant et retenir axialement l'aimant cylindrique du rotor, la frette peut avoir une forme sensiblement cylindrique enveloppant l'aimant cylindrique. De plus, le matériau amagnétique permet d'éviter les fuites magnétiques.

Selon l'invention, le rotor est monté sur l'arbre de compression, et un écrou est placé à l'extrémité de l'arbre de compression pour maintenir axialement le rotor et la roue de compression. En d'autres termes, l'arbre de compression traverse le rotor, et l'ensemble est maintenu par un écrou disposé sur l'extrémité débouchante de l'arbre de compression. Ainsi, le rotor est en appui d'un côté sur la roue de compression et sur l'écrou de l'autre côté. De cette manière, le rotor n'a pas besoin de comprendre des moyens de fixation, en particulier un système de filetage/taraudage, avec l'arbre de compression (comme cela est le cas pour les réalisations décrites dans la demande de brevet dont le numéro de dépôt est FR 17/61.576). Ainsi, les fonctions de coaxialité et de maintien sont disjointes, ce qui facilite les opérations de montage. De plus, l'arbre de compression est plus long que celui décrit dans la demande antérieure citée, ce qui facilite sa conception. Ainsi, l'invention permet de réduire la complexité de l'assemblage, de réduire le nombre d'opérations dans le procédé de réalisation et d'assemblage du dispositif de compression, et de réduire la complexité des pièces à réaliser. L'écrou peut également permettre d'exercer une précharge du rotor, du compresseur, et d'un système de guidage du compresseur (roulement) par rapport à un carter.

Selon un mode de réalisation de l'invention, le rotor peut également comporter un moyen de support de l'aimant cylindrique, disposé entre l'arbre de compression et l'aimant cylindrique. Le moyen de support a pour but de faciliter la coaxialité du rotor et de l'arbre de compression. Le moyen de support comporte un alésage interne du diamètre de l'arbre de compression. Pour ce mode de réalisation, le moyen de support peut être cylindrique. Le moyen de support est dit cylindrique, car il comporte une surface externe avec au moins une portion cylindrique, pour positionner l'aimant cylindrique du rotor. Selon certaines réalisations, le moyen de support peut avoir plusieurs portions cylindriques de diamètres extérieurs différents.

Conformément à une première mise en oeuvre de ce mode de réalisation, le moyen de support de l'aimant cylindrique peut être formé d'une douille cylindrique. La frette exerce alors une compression radiale de l'aimant cylindrique sur la douille cylindrique. De préférence, la douille cylindrique peut être réalisée en un matériau magnétique.

Selon une première variante de cette première mise en oeuvre, la douille cylindrique peut avoir une longueur égale à la longueur du rotor. Dans ce cas, la douille cylindrique peut être en butée d'un côté contre la roue de compression, et de l'autre côté contre l'écrou. Pour cette réalisation, la douille cylindrique peut comporter un épaulement, l'épaulement peut être en contact avec la roue de compression ou avec l'écrou. Pour l'assemblage de cette variante, le rotor est assemblé sur le dispositif de compression après avoir préalablement positionné la roue de compression sur l'arbre de compression. Cette variante de réalisation permet de pouvoir réaliser chaque élément dans le matériau qui correspond le plus à sa fonction.

Selon une deuxième variante de cette première mise en oeuvre, la douille cylindrique peut avoir une longueur correspondant à la longueur cumulée du rotor et de la roue de compression. Dans ce cas, la roue de compression est montée sur une portion de la douille cylindrique. De plus, la douille cylindrique peut être en butée d'un côté contre l'écrou et de l'autre côté contre un système de guidage du compresseur (par exemple roulement ou palier lisse). La douille cylindrique peut avoir trois portions cylindriques de diamètres pouvant être différents, une pour la mise en place de la roue de compresseur, une pour la mise en place de l'aimant cylindrique, et un épaulement entre les deux autres portions. Pour cette variante, l'assemblage est réalisé en montant la roue de compression sur la douille cylindrique, de manière à réaliser un assemblage préliminaire rotor avec la roue de compression et de manière à équilibrer le système en une fois. Dans cet assemblage, la roue de compression peut être maintenue sur la douille cylindrique par un frettage, un collage, un système de pré-contrainte axiale, ou tout moyen analogue. Un avantage de cette variante est qu'elle permet d'augmenter la rigidité au niveau de l'axe de la roue de compression, ce qui permet d'accroître les valeurs des régimes critiques de flexion. En effet, la portion de l'arbre de compression sous la roue de compression peut être un point critique pour certains modes de flexion.

Conformément à une deuxième mise en oeuvre de l'invention, la roue de compression peut comprendre le moyen de support cylindrique. En d'autres termes, la roue de compression et le moyen de support cylindrique sont réalisés en une seule pièce monobloc. Le moyen de support est alors une prolongation axiale de forme cylindrique de la roue de compression. L'assemblage de cette mise en oeuvre peut comprendre les étapes d'assemblage du rotor sur la prolongation axiale de la roue de compression. Cette mise en oeuvre de l'invention permet de réaliser un système assemblé préalablement et équilibré en une seule fois. De plus, cette mise en oeuvre de l'invention permet de limiter le nombre de pièces, et par conséquent le nombre d'étapes d'assemblage du dispositif de compression.

De préférence, le rotor selon l'invention peut comporter radialement au maximum les éléments suivants : moyen de support (douille cylindrique ou prolongation de la roue de compression), aimant cylindrique et frette, le tout étant monté sur l'arbre de compression.

Alternativement, le rotor peut ne pas comporter de moyen de support et l'aimant cylindrique peut être directement placé autour de l'arbre de compression. Cette option de réalisation permet de limiter le nombre de composants, et par conséquent, le nombre d'étapes d'assemblage du dispositif.

Selon un aspect de l'invention, le rotor peut comporter en outre une butée amagnétique sur au moins un côté de l'aimant (longitudinalement). Cette butée amagnétique permet d'éviter les fuites magnétiques de l'aimant vers la roue de compression. La butée amagnétique peut aussi jouer le rôle de barrière thermique pour protéger l'aimant sensible à la température. Cette butée amagnétique peut prendre la forme d'un anneau inséré entre un épaulement de la roue de compression et l'aimant cylindrique. En d'autres termes, la butée amagnétique peut s'intercaler axialement entre l'aimant et la roue de compression.

De préférence, la machine électrique peut être montée du côté de l'admission du dispositif de compression. Pour ce mode de réalisation préféré, le rotor de la machine électrique peut être en appui d'un côté sur la roue de compression et sur l'écrou de l'autre côté. Ainsi, le montage de l'ensemble est facilité et l'encombrement réduit au maximum. En d'autres termes, la machine électrique peut être adjacente à la roue de compression du côté de son admission.

Selon l'invention, le rotor (en l'occurrence la frette) a un diamètre extérieur inférieur ou égal au diamètre du nez de la roue de compression. De cette manière, le flux de gaz en entrée du dispositif de compression n'est pas entravé par l'arbre de rotor.

Conformément à une mise en oeuvre de l'invention, le dispositif de compression peut être un turbocompresseur, notamment pour un moteur à combustion interne d'un véhicule. Il s'agit alors d'un turbocompresseur entraîné par une machine électrique. Dans ce cas, l'arbre de compression correspond à l'arbre du turbocompresseur qui lie la turbine du turbocompresseur au compresseur du turbocompresseur. Ainsi la machine électrique entraîne à la fois le compresseur et la turbine.

Selon une variante de cette mise en oeuvre de l'invention, la machine électrique peut être agencée dans l'admission du gaz (généralement de l'air) du système du turbocompresseur. Cette solution présente un avantage double : la machine électrique peut être refroidie par le flux de gaz d'admission, et le gaz d'admission est chauffé par la machine électrique, ce qui peut être favorable dans certains modes de fonctionnement du moteur à combustion interne.

De préférence, la machine électrique peut être une machine électrique à grille statorique, c'est-à-dire une machine électrique ayant un stator ayant des dents statoriques autour desquelles sont montées des bobines, ces dents statoriques étant de grandes dimensions pour permettre un passage du flux d'air. Une telle machine à grille statorique est décrite notamment dans les demandes de brevet WO2013/050577 et FR 3048022.

La figure 1 illustre, schématiquement et de manière non limitative, un premier mode de réalisation de l'invention. La figure 1 est une vue en coupe du dispositif de compression 1 entrainé par une machine électrique. Le mode de réalisation de la figure 1 correspond à la première variante de la première mise en oeuvre décrite ci-dessus. Le dispositif de compression 1 comprend un arbre de compression 3 sur lequel sont montés une roue de compression 2 et un rotor 4. L'extrémité de l'arbre de compression 3 est filetée pour le montage d'un écrou 8 qui maintient axialement le rotor 4 et la roue de compression 2. Le rotor 4 est disposé entre la roue de compression 2 et l'écrou 8. Le rotor 4 est formé par une douille cylindrique 7 servant de moyen de support, un aimant cylindrique 5 et une frette 6. La douille cylindrique 7, pouvant être en matériau magnétique, a la même longueur que le rotor 4, en étant en butée contre l'écrou 8 et la roue de compression 2. Du côté de la roue de compression 2, la douille cylindrique 7 comporte un épaulement, dont le diamètre extérieur correspond au diamètre intérieur de la frette 6. La douille cylindrique 7 est montée sur l'arbre de compression 3. L'aimant cylindrique 5 est monté sur la douille cylindrique 7. La frette 6 maintient l'aimant cylindrique 5 sur la douille cylindrique 7. Le diamètre extérieur de la frette 6 est sensiblement égal au diamètre du nez de la roue de compression 2. De l'autre côté, la roue de compression 2 est en butée contre un système de guidage 9, par exemple la bague intérieure d'un roulement, dont la bague extérieure 10 est représentée.

La figure 2 illustre, schématiquement et de manière non limitative, un deuxième mode de réalisation de l'invention. La figure 2 est une vue en coupe du dispositif de compression 1 entraîné par une machine électrique. Le mode de réalisation de la figure 2 correspond à la deuxième variante de la première mise en oeuvre décrite ci-dessus. Le dispositif de compression 1 comprend un arbre de compression 3 sur lequel sont montés une roue de compression 2 et un rotor 4. L'extrémité de l'arbre de compression 3 est filetée pour le montage d'un écrou 8 qui maintient axialement le rotor 4 et la roue de compression 2. Le rotor 4 est disposé entre la roue de compression 2 et l'écrou 8. Le rotor 4 est formé par une douille cylindrique 7' servant de moyen de support, un aimant cylindrique 5 et une frette 6. La douille cylindrique 7', pouvant être en matériau magnétique, a une longueur légèrement supérieure à la longueur cumulée du rotor 4 et de la roue de compression, en étant en butée contre l'écrou 8 et un système de guidage 9. La douille cylindrique 7' est montée sur l'arbre de compression 3. La roue de compression 2 est montée sur une portion extrémale cylindrique de la douille cylindrique 7'. L'aimant cylindrique 5 est monté sur une autre portion extrémale de la douille cylindrique 7'. La frette 6 maintient l'aimant cylindrique 5 sur la douille cylindrique 7'. De plus, la douille cylindrique 7' comprend un épaulement entre les portions extrémales, dont le diamètre extérieur correspond au diamètre intérieur de la frette 6. Le diamètre extérieur de la frette 6 est sensiblement égal au diamètre du nez de la roue de compression 2. De l'autre côté, la roue de compression 2 et la douille cylindrique 7' sont en butée contre un système de guidage 9, par exemple la bague intérieure d'un roulement, dont la bague extérieure 10 est représentée.

La figure 3 illustre, schématiquement et de manière non limitative, un troisième mode de réalisation de l'invention. La figure 3 est une vue en coupe du dispositif de compression 1 entraîné par une machine électrique. Le mode de réalisation de la figure 3 correspond à la troisième mise en oeuvre décrite ci-dessus. Le dispositif de compression 1 comprend un arbre de compression 3 sur lequel sont montés une roue de compression 2 et un rotor 4. L'extrémité de l'arbre de compression 3 est filetée pour le montage d'un écrou 8 qui maintient axialement le rotor 4 et la roue de compression 2. Le rotor 4 est disposé entre la roue de compression 2 et l'écrou 8. Le rotor 4 est formé par un moyen de support 2', un aimant cylindrique 5 et une frette 6. Le moyen support 2' appartient à la même pièce que la roue de compression 2 : le moyen support 2' est une portion cylindrique prolongeant axialement la roue de compression 2. L'aimant cylindrique 5 est monté sur la portion cylindrique 2' prolongeant axialement la roue de compression 2. La frette 6 maintient l'aimant cylindrique 5 sur le moyen de support 2'. De plus, le rotor comporte une butée amagnétique 11 entre la roue de compression 2 et l'aimant cylindrique 5. Le diamètre extérieur de la frette 6 est sensiblement égal au diamètre du nez de la roue de compression 2. De l'autre côté, la roue de compression 2 est en butée contre un système de guidage 9, par exemple la bague intérieure d'un roulement, dont la bague extérieure 10 est représentée.

En outre, l'invention concerne un procédé de fabrication d'un dispositif de compression entraîné par une machine électrique, ladite machine électrique comprenant un rotor et un stator, et ledit dispositif de compression comprenant un arbre de compression et une roue de compression. Pour ce procédé, on met en oeuvre les étapes suivantes :
a. on monte la roue de compression sur l'arbre de compression ;
b. on monte un rotor sur un moyen de support, disposé autour de l'arbre de compression 5
c. on retient ledit aimant cylindrique sur le moyen de support au moyen d'une frette, de préférence amagnétique, la frette comprimant l'aimant le moyen de support, la frette est sensiblement cylindrique ; et
d. on maintient axialement le rotor et la roue de compression au moyen d'un écrou placé à l'extrémité de l'arbre de compression.

Avantageusement, le procédé de fabrication peut être destiné à fabriquer un dispositif de compression selon une quelconque des variantes ou des combinaisons des variantes décrites précédemment. Par exemple, le procédé de fabrication peut être prévu pour fabriquer un dispositif de compression tel que décrit en référence à l'une des figures 1 à 3.

Pour le premier mode de réalisation de la figure 1, l'étape b) peut comprendre en outre une sous-étape de montage l'aimant cylindrique 5 sur la pièce support 7 ainsi que la frette 6 et éventuellement une butée amagnétique sur l'arbre de compression 3.

Pour le deuxième mode de réalisation de la figure 2, l'étape a) peut comprendre une sous-étape préalable de montage de la roue de compression 2 sur la douille cylindrique 7' (moyen de support) par un frettage, un collage, un système de pré-contrainte axiale, ou tout moyen analogue, et une sous-étape de montage de l'ensemble roue de compression 2 et douille cylindrique 7' sur l'arbre de compression 3. Ce mode de réalisation permet d'équilibrer le dispositif 1 en une fois.

Pour le troisième mode de réalisation de la figure 3, l'étape b) peut consister à monter l'aimant cylindrique 5 avec la frette 6 et éventuellement la butée amagnétique 11 sur la portion cylindrique 2' prolongeant la roue de compression 2 (moyen de support). Cette mise en oeuvre de l'invention permet de réaliser un système assemblé préalablement et équilibré en une seule fois.

Conformément à un mode de réalisation du procédé, l'ensemble dispositif de compression, ou éventuellement turbocompresseur, et machine électrique peut être installé dans une boucle d'air d'un moteur à combustion interne.

Avantageusement, on peut placer la machine électrique dans la conduite d'admission d'air, de sorte que le flux d'air qui entre dans le dispositif de compression traverse d'abord la machine électrique. Cette solution présente un avantage double : la machine électrique peut être refroidie par le flux de gaz d'admission, et le gaz d'admission est chauffé par la machine électrique, ce qui peut être favorable dans certains modes de fonctionnement du moteur à combustion interne.

Le procédé de fabrication peut comporter en outre une étape d'installation du stator autour du rotor.

De manière avantageuse, le procédé de fabrication selon l'invention peut concerner l'électrification d'un dispositif de compression ou d'un turbocompresseur classique (équipé d'une roue de compression et d'un arbre de compression mais initialement sans entraînement électrique). Pour cela, la roue de compression et l'arbre de compression peuvent être une roue et un arbre de compression, pour lequel on réalise les étapes a) à d) décrites ci-dessus.

Dans ce cas, le procédé peut comporter une étape supplémentaire de remplacement de l'arbre de compression, par un arbre de compression plus long.

En outre, l'invention est également adaptée pour les systèmes de production d'énergie tels que les microturbines.

L'invention présente les intérêts fonctionnels suivants, elle permet de :
- Créer un rotor magnétique, permettant la mise en rotation de l'arbre, grâce à la génération d'un champ magnétique tournant par l'intermédiaire d'un stator comportant des générateurs de flux magnétiques tels que des bobinages (par exemple triphasés),
- Assurer la tenue mécanique de l'ensemble rotor, notamment vis-à-vis des forces centrifuges qui s'appliquent lors de la mise en rotation, notamment grâce à la frette,
- Garantir de bonnes performances électriques, en termes de puissance mais aussi de rendement, de façon à limiter l'échauffement interne du rotor (et donc la démagnétisation) et simplifier son refroidissement,
- Respecter un haut niveau de concentricité entre le rotor électrique et l'arbre du turbocompresseur afin d'obtenir un système mécanique complet (arbre turbocompresseur avec rotor de la machine électrique) équilibrable avec minimum de balourd,
- Présenter une structure compatible avec l'assemblage de la roue compresseur avec le rotor sur l'arbre turbocompresseur, notamment au moyen de l'écrou,
- Réaliser le serrage de la roue compresseur avec le rotor et précharger les roulements des paliers turbocompresseur, notamment au moyen de l'écrou, et
- Etre compatible avec un outillage et un procédé de réalisation de turbocompresseur électrique de grande série.

## Revendications

1. Dispositif de compression d'un fluide entraîné par une machine électrique, ladite machine électrique comprenant un rotor (4) et un stator, ledit dispositif de compression comprenant un arbre de compression (3) sur lequel est montée au moins une roue de compression (2), ledit rotor (4) comprenant un aimant cylindrique (5) et une frette (6) pour retenir ledit aimant cylindrique (5), **caractérisé en ce que** ledit rotor (4) est monté sur ledit arbre de compression (3) du côté de l'admission dudit dispositif de compression, et **en ce qu'**un écrou (8) placé à l'extrémité dudit arbre de compression (3) maintient axialement ledit rotor (4) et ladite roue de compression (2), ledit rotor (4) étant en appui d'un côté sur ladite roue de compression (2) et sur l'écrou (8) de l'autre côté, et **en ce que** ledit rotor (4) a un diamètre extérieur inférieur ou égal au diamètre du nez de ladite roue de compression (2).

2. Dispositif de compression selon la revendication 1, dans lequel ledit rotor (4) comporte un moyen de support (7, 7', 2') dudit aimant cylindrique (5), ledit moyen de support (7 , 7', 2') étant cylindrique, et étant disposé autour dudit arbre de compression (3).

3. Dispositif de compression selon la revendication 2, dans lequel ledit moyen de support est une douille cylindrique (7, 7').

4. Dispositif de compression selon la revendication 3, dans lequel ladite douille cylindrique (7) est en butée contre ladite roue de compression (2) et contre ledit écrou (8).

5. Dispositif de compression selon la revendication 3, dans lequel ladite douille cylindrique (7') est en butée contre un système de guidage (9) de l'arbre de compression (3) et contre ledit écrou (8).

6. Dispositif de compression selon la revendication 3 ou 5, dans lequel ladite roue de compression (2) est montée sur ladite douille cylindrique (7').

7. Dispositif de compression selon la revendication 2, dans lequel ladite roue de compression (2) comprend ledit moyen de support (2').

8. Dispositif de compression selon l'une des revendications précédentes, dans lequel ledit rotor(4) comporte au moins une butée amagnétique (11) sur un côté dudit aimant cylindrique (5).

9. Dispositif de compression selon l'une des revendications précédentes, dans lequel ladite frette (6) est réalisée en un matériau amagnétique, de préférence en titane ou en carbone.

10. Dispositif de compression selon l'une des revendications précédentes, dans lequel ledit dispositif de compression est un turbocompresseur associant une turbine et un compresseur, notamment pour un moteur à combustion interne, ou une microturbine.

11. Dispositif de compression selon la revendication 10, dans lequel ladite machine électrique est agencée dans l'admission du gaz dudit turbocompresseur.

12. Dispositif de compression selon l'une des revendications précédentes, dans lequel ladite machine électrique est une machine à grille statorique.

13. Procédé de fabrication d'un dispositif de compression entrainé par une machine électrique, ladite machine électrique comprenant un rotor (4) et un stator, ledit dispositif de compression comprenant un arbre de compression (3) sur lequel est montée au moins une roue de compression (2), ledit rotor (4) comprenant un aimant cylindrique (5) et une frette (6) pour retenir ledit aimant cylindrique (5), ledit rotor (4) ayant un diamètre extérieur inférieur ou égal au diamètre du nez de ladite roue de compression (2), **caractérisé en ce qu'**on réalise les étapes suivantes :
a) on monte ladite roue de compression (2) sur ledit arbre de compression (3) ;
b) on monte un aimant cylindrique (5) sur un moyen de support (7, 7', 2'), placé sur ledit arbre de compression (3) du côté de l'admission dudit dispositif de compression ;
c) on retient radialement ledit aimant cylindrique (5) au moyen d'une frette (6) ; et
d) on maintient axialement ledit rotor (4) et ladite roue de compression (3) au moyen d'un écrou (8) placé à l'extrémité dudit arbre de compression (3), ledit rotor (4) étant en appui d'un côté sur ladite roue de compression (2) et sur l'écrou (8) de l'autre côté.

## Patentansprüche

1. Vorrichtung zum Verdichten eines Fluids, welche von einer elektrischen Maschine angetrieben wird, wobei die elektrische Maschine einen Rotor (4) und einen Stator umfasst, wobei die Vorrichtung zum Verdichten eine Kompressionswelle (3) umfasst, auf der mindestens ein Kompressionsrad (2) angebracht ist, wobei der Rotor (4) einen zylindrischen Magneten (5) und einen Schrumpfring (6) zum Halten des zylindrischen Magneten (5) umfasst, **dadurch gekennzeichnet, dass** der Rotor (4) auf der Einlassseite der Vorrichtung zum Verdichten auf der Kompressionswelle (3) angebracht ist, und dadurch, dass eine am Ende der Kompressionswelle (3) angeordnete Mutter (8) den Rotor (4) und das Kompressionsrad (2) axial hält, wobei der Rotor (4) auf einer Seite an dem Kompressionsrad (2) und auf der anderen Seite an der Mutter (8) anliegt, und dadurch, dass der Rotor (4) einen Außendurchmesser aufweist, der kleiner oder gleich dem Durchmesser des Vorderteils des Kompressionsrades (2) ist.

2. Vorrichtung zum Verdichten nach Anspruch 1, wobei der Rotor (4) ein Haltemittel (7, 7', 2') für den zylindrischen Magneten (5) aufweist, wobei das Haltemittel (7, 7', 2') zylindrisch ist und um die Kompressionswelle (3) herum angeordnet ist.

3. Vorrichtung zum Verdichten nach Anspruch 2, wobei das Haltemittel eine zylindrische Hülse (7, 7') ist.

4. Vorrichtung zum Verdichten nach Anspruch 3, wobei die zylindrische Hülse (7) an dem Kompressionsrad (2) und an der Mutter (8) anliegt.

5. Vorrichtung zum Verdichten nach Anspruch 3, wobei die zylindrische Hülse (7') an einem Führungssystem (9) der Kompressionswelle (3) und an der Mutter (8) anliegt.

6. Vorrichtung zum Verdichten nach Anspruch 3 oder 5, wobei das Kompressionsrad (2) auf der zylindrischen Hülse (7') angebracht ist.

7. Vorrichtung zum Verdichten nach Anspruch 2, wobei das Kompressionsrad (2) das Haltemittel (2') umfasst.

8. Vorrichtung zum Verdichten nach einem der vorhergehenden Ansprüche, wobei der Rotor (4) mindestens einen nicht magnetischen Anschlag (11) auf einer Seite des zylindrischen Magneten (5) aufweist.

9. Vorrichtung zum Verdichten nach einem der vorhergehenden Ansprüche, wobei der Schrumpfring (6) aus einem nicht magnetischen Material hergestellt ist, vorzugsweise aus Titan oder aus Kohlenstoff.

10. Vorrichtung zum Verdichten nach einem der vorhergehenden Ansprüche, wobei die Vorrichtung zum Verdichten ein Turboverdichter ist, der eine Turbine und einen Verdichter vereinigt, insbesondere für eine Brennkraftmaschine, oder eine Mikroturbine.

11. Vorrichtung zum Verdichten nach Anspruch 10, wobei die elektrische Maschine im Einlass des Gases des Turboverdichters angeordnet ist.

12. Vorrichtung zum Verdichten nach einem der vorhergehenden Ansprüche, wobei die elektrische Maschine eine Maschine mit Statorgitter ist.

13. Verfahren zur Herstellung einer von einer elektrischen Maschine angetriebenen Vorrichtung zum Verdichten, wobei die elektrische Maschine einen Rotor (4) und einen Stator umfasst, wobei die Vorrichtung zum Verdichten eine Kompressionswelle (3) umfasst, auf der mindestens ein Kompressionsrad (2) angebracht ist, wobei der Rotor (4) einen zylindrischen Magneten (5) und einen Schrumpfring (6) zum Halten des zylindrischen Magneten (5) umfasst, wobei der Rotor (4) einen Außendurchmesser aufweist, der kleiner oder gleich dem Durchmesser des Vorderteils des Kompressionsrades (2) ist, **dadurch gekennzeichnet, dass** die folgenden Schritte durchgeführt werden:
a) Das Kompressionsrad (2) wird auf der Kompressionswelle (3) angebracht;
b) ein zylindrischer Magnet (5) wird auf einem Haltemittel (7, 7', 2') angebracht, das auf der Einlassseite der Vorrichtung zum Verdichten auf der Kompressionswelle (3) angebracht ist;
c) der zylindrische Magnet (5) wird mittels eines Schrumpfringes (6) radial gehalten; und
d) der Rotor (4) und das Kompressionsrad (3) werden mittels einer am Ende der Kompressionswelle (3) angeordneten Mutter (8) axial gehalten, wobei der Rotor (4) auf einer Seite an dem Kompressionsrad (2) und auf der anderen Seite an der Mutter (8) anliegt.

## Claims

1. Fluid compression device driven by an electric machine, said electric machine comprising a rotor (4) and a stator, said compression device comprising a compression shaft (3) on which is mounted at least one compression wheel (2), said rotor (4) comprising a cylindrical magnet (5) and a ferrule (6) for retaining said cylindrical magnet (5), **characterized in that** said rotor (4) is mounted on said compression shaft (3) on the side of the intake of said compression device, and **in that** a nut (8) placed at the end of said compression shaft (3) axially holds said rotor (4) and said compression wheel (2), said rotor (4) bearing on one side on said compression wheel (2) and on the nut (8) on the other side, and **in that** said rotor (4) has an outer diameter that is smaller than or equal to the diameter of the nose of said compression wheel (2).

2. Compression device according to Claim 1, wherein said rotor (4) has a support means (7, 7', 2') for said cylindrical magnet (5), said support means (7, 7', 2') being cylindrical, and being disposed around said compression shaft (3).

3. Compression device according to Claim 2, wherein said support means is a cylindrical bushing (7, 7').

4. Compression device according to Claim 3, wherein said cylindrical bushing (7) is in abutment against said compression wheel (2) and against said nut (8).

5. Compression device according to Claim 3, wherein said cylindrical bushing (7') is in abutment against a guiding system (9) for the compression shaft (3) and against said nut (8).

6. Compression device according to Claim 3 or 5, wherein said compression wheel (2) is mounted on said cylindrical bushing (7').

7. Compression device according to Claim 2, wherein said compression wheel (2) comprises said support means (2').

8. Compression device according to one of the preceding claims, wherein said rotor (4) has at least one nonmagnetic stop (11) on one side of said cylindrical magnet (5) .

9. Compression device according to one of the preceding claims, wherein said ferrule (6) is made of a nonmagnetic material, preferably titanium or carbon.

10. Compression device according to one of the preceding claims, wherein said compression device is a turbocompressor that brings together a turbine and a compressor, in particular for an internal combustion engine, or a micro-turbine.

11. Compression device according to Claim 10, wherein said electric machine is arranged in the gas intake of said turbocompressor.

12. Compression device according to one of the preceding claims, wherein said electric machine is a machine having a stator grating.

13. Method for manufacturing a compression device driven by an electric machine, said electric machine comprising a rotor (4) and a stator, said compression device comprising a compression shaft (3) on which is mounted at least one compression wheel (2), said rotor (4) comprising a cylindrical magnet (5) and a ferrule (6) for retaining said cylindrical magnet (5), said rotor (4) having an outer diameter that is smaller than or equal to the diameter of the nose of said compression wheel (2), **characterized in that** the following steps are carried out:
a) mounting said compression wheel (2) on said compression shaft (3);
b) mounting a cylindrical magnet (5) on a support means (7, 7', 2'), placed on said compression shaft (3) on the side of the inlet of said compression device;
c) radially retaining said cylindrical magnet (5) by means of a ferrule (6); and
d) axially holding said rotor (4) and said compression wheel (3) by means of a nut (8) placed at the end of said compression shaft (3), said rotor (4) bearing on one side on said compression wheel (2) and on the nut (8) on the other side.
